# EUROPEAN PATENT APPLICATION

(11) **EP 3 576 233 A1**
(43) Date of publication of application: **04.12.2019**
(21) Application number: 17903896.3
(22) Date of filing: 25.12.2017
(51) Int. Cl.: H01S 3/034

(54) **GAS LASER DEVICE**

(30) Priority: 30.03.2017 JP 2017066912
(71) Applicant: Murata Manufacturing Co., Ltd., Nagaokakyo-shi, Kyoto 617-8555 (JP)
(72) Inventor: ISHII, Futoshi, Nagaokakyo-shi Kyoto 617-8555 (JP)
(74) Representative: Herrmann, Uwe
(86) International application number: PCT/JP2017/046482
(87) International publication number: WO 2018/179642

(57) **Abstract**

A gas laser device (1) includes: a gas laser tube (10) having an internal space (12) in which gas is enclosed, laser light being generated by exciting the gas; and a window member (20) mounted at one end side in an axial direction of the gas laser tube (10), the window member (20) has a transmission region (22) that is a uniaxial crystal, the transmission region (22) is configured such that the laser light is transmitted therethrough, and the window member (20) is mounted on the gas laser tube (10) such that an optical axis of the laser light transmitting the transmission region (22) and an optic axis of the uniaxial crystal are substantially parallel to each other.

## Description

### Technical Field

The present invention relates to a gas laser device.

### Background Art

In a semiconductor exposure apparatus for exposing an electronic circuit pattern on a silicon wafer, a gas laser that generates light by excitation of gas enclosed inside a chamber and applies irradiation light having a predetermined wave length is generally used. For example, Patent Document 1 discloses a chamber filled with gas and a gas discharge chamber including first and second windows through which a laser is transmitted. In this configuration, calcium fluoride or magnesium fluoride is used as the first and second windows. In addition, Patent Document 2 discloses a gas laser tube in which quartz is used as a Brewster window.

### Citation List

### Patent Document

Patent Document 1: Japanese Unexamined Patent Application Publication No. 2013-128156
Patent Document 2: Japanese Unexamined Patent Application Publication No. 9-214020

### Summary of Invention

### Technical Problem

As described above, there are various materials to be used as the windows. The windows are members through which laser light is transmitted. Thus, it is preferred that light loss in the windows be reduced as much as possible and light transmission efficiency be higher.

The present invention has been made in view of such circumstances, and an object of the present invention is to provide a gas laser device having improved light transmission efficiency.

### Solution to Problem

A gas laser device according to one aspect of the present invention includes: a gas laser tube having an internal space in which gas is enclosed, laser light being generated by exciting the gas; and a window member mounted at one end side in an axial direction of the gas laser tube. The window member has a transmission region that is a uniaxial crystal, the transmission region is configured such that the laser light is transmitted therethrough, and the window member is mounted on the gas laser tube such that an optical axis of the laser light transmitting the transmission region and an optic axis of the uniaxial crystal are substantially parallel to each other. Advantageous Effects of Invention

According to the present invention, it is possible to provide a gas laser device having improved light transmission efficiency.

### Brief Description of Drawings

[Fig. 1] Fig. 1 is a diagram schematically showing a gas laser device according to an embodiment of the present invention.
[Fig. 2] Fig. 2 is a plan view of a main surface of a window member of the gas laser device according to the embodiment of the present invention.
[Fig. 3A] Fig. 3A is a diagram for explaining birefringence in a uniaxial crystal.
[Fig. 3B] Fig. 3B is a diagram for explaining birefringence in the uniaxial crystal.
[Fig. 4] Fig. 4 is a plan view of a side surface of the window member of the gas laser device according to the embodiment of the present invention.
[Fig. 5] Fig. 5 is a cross-sectional view of Fig. 2 taken along a line V-V.

### Description of Embodiments

Hereinafter, embodiments of the present invention will be described. In the following description of the drawings, identical or similar components are designated by identical or similar signs. The drawings are illustrative, the dimension and the shape of each portion are schematic, and the technical scope of the invention of the present application should not be construed to be limited to the embodiments.

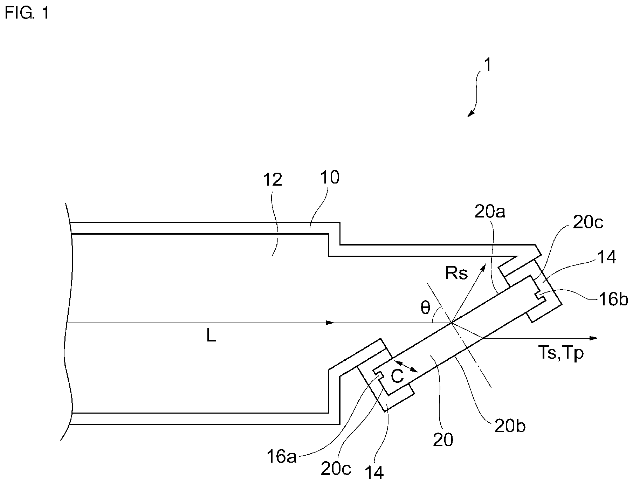

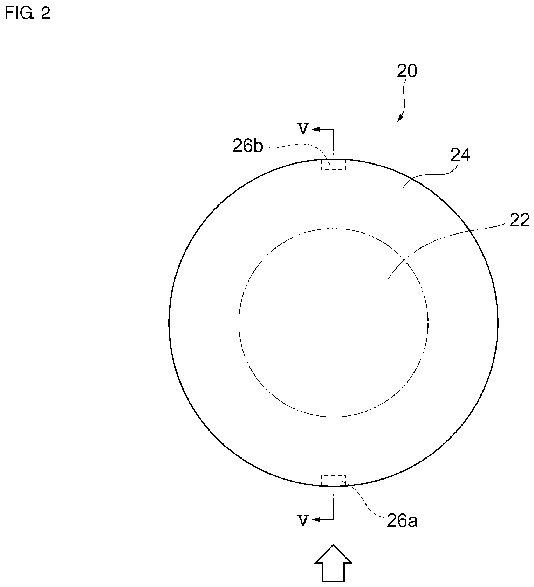

A gas laser device according to an embodiment of the present invention will be described with reference to Figs. 1 and 2. Fig. 1 is a diagram schematically showing the gas laser device according to the embodiment of the present invention, and Fig. 2 is a plan view of a main surface of a window member of the gas laser device according to the embodiment of the present invention. Fig. 1 is a diagram showing a cross-section of the gas laser device 1.

As shown in Fig. 1, the gas laser device 1 includes a gas laser tube 10 and a window member 20. The gas laser device 1 is a device for applying laser light L generated in the gas laser tube 10, to a target object through the window member 20. In the following, a description will be given with, as an example, the case where the gas laser device 1 is an excimer laser. The gas laser device 1 may include an element other than the elements shown in Fig. 1.

The use of the gas laser device 1 is not particularly limited, but the gas laser device 1 is applied to a semiconductor exposure apparatus and used for exposure for forming a circuit pattern on a silicon wafer in production of an integrated circuit. Alternatively, the gas laser device 1 may be used for surface modification to change the physical properties of the surface of a workpiece, curing (photo-curing) such as resist-curing and adhesion of an electronic component or the like, and optical washing for removing organics adhering to the surface of a workpiece. Furthermore, the gas laser device 1 may be applied to medical equipment for LASIK surgery or the like.

The gas laser tube 10 has a tubular shape extending in the axial direction thereof, for example. The outer shape of the gas laser tube 10 is, for example, a cylindrical shape or a polygonal columnar shape. Gas is enclosed in an internal space 12 formed by the gas laser tube 10 and the window member 20 described later. In a state where the gas is enclosed, when discharge is generated in the internal space 12, for example, by a system (not shown) for exciting the gas, the gas is excited. The excited gas tends to return to the original state, and thus the laser light L is generated by energy discharged when the excited gas returns to the original state. As the laser light L, there are various types of light in accordance with the use, and the laser light L is specifically, for example, ultraviolet light (for example, having a wave length of 400 nm or less) or deep ultraviolet light (for example, having a wave length not less than 150 nm and not greater than 200 nm). The gas to be filled into the internal space 12 is not particularly limited. For example, the gas may be mixed gas of buffer gas (neon, helium, or the like), rare gas (krypton, argon, or the like), and halogen (fluorine or the like). It is possible to adjust an oscillation wave length in accordance with the type and the proportion of the gas to be enclosed.

Moreover, the gas laser tube 10 includes a mount portion 14 to which the window member 20 described later is mounted. The mount portion 14 has projections 16a and 16b described later. The material of the mount portion 14 is not particularly limited, and examples thereof include an elastic body, metal, glass, and quartz. The mount portion 14 of the gas laser tube 10 and the window member 20 are joined by means of, for example, metal joining with a brazing material or the like, glass adhesion, resin adhesion, siloxane bond, or the like.

The window member 20 is mounted at at least one end side in the axial direction of the gas laser tube 10. The window member 20 transmits and outputs the laser light L generated in the internal space 12 of the gas laser tube 10. The window member 20 has a main surface 20a (first main surface) at the internal space 12 side of the gas laser tube 10, a main surface 20b (second main surface) at the outer side opposing the main surface 20a, and a side surface 20c located between the main surface 20a and the main surface 20b.

Fig. 2 is a plan view of the window member 20 as seen from the main surface 20a side at the internal space 12 side. As shown in Fig. 2, the window member 20 has a circular flat plate shape, for example. The window member 20 has, in plan view of the main surface 20a or the main surface 20b, a transmission region 22 located at and around the center of the circular shape and a peripheral region 24 located outside the transmission region 22. That is, the transmission region 22 is a region through which the laser light L is transmitted, and the peripheral region 24 is a region on which later-described marks 26a and 26b are formed and to which the mount portion 14 is joined. The shape of the window member 20 is an example and is not limited to the circular flat plate shape. For example, the shape of the window member 20 in plan view of the main surface may be a polygonal shape instead of the circular shape, or the main surface thereof may be a curved surface instead of the flat surface.

In the present embodiment, the window member 20 is made of a crystal having an optic axis only in one direction (that is, a uniaxial crystal). Examples of the uniaxial crystal include artificial quartz, natural quartz, quartz, calcite, and zircon. In this specification, a description will be given with, as an example, a configuration in which the window member 20 is made of artificial quartz. Artificial quartz has a high transmittance in a wide wave length range as compared to other materials (for example, artificial quartz glass). In addition, with artificial quartz, even in the case where the laser light has a relatively short wave length and has high energy (for example, deep ultraviolet light), the optical characteristics are unlikely to be deteriorated and progress of degradation is slow. Furthermore, artificial quartz does not have deliquescence and thus has excellent water resistance. Therefore, artificial quartz suitably functions as a window member that transmits the laser light. The window member 20 may be made of a material different from artificial quartz.

As shown in Fig. 1, the window member 20 is mounted such that an angle θ formed between the optical axis of the incident laser light L and a line normal to the main surface 20a (that is, the incident angle of the laser light L) is substantially equal to the Brewster angle. Thus, part of an S-polarized component of the laser light L is reflected on the main surface 20a and becomes reflected light Rs, whereas a P-polarized component of the laser light L has a reflectance of zero on the main surface 20a. That is, no reflected light is ideally generated from the P-polarized component, and the entire P-polarized component is transmitted. Here, light that transmits the window member 20 is the sum of transmitted light Ts of the S-polarized component and transmitted light Tp of the P-polarized component. Therefore, when the incident angle θ is substantially equal to the Brewster angle, the light transmission efficiency of the window member 20 is improved as compared to the configuration in which the incident angle θ is different from the Brewster angle. The window member 20 is preferably mounted such that the incident angle θ is substantially equal to the Brewster angle, but the window member 20 only needs to be mounted such that the reflectance of the P-polarized component is relatively low even when the incident angle θ is not equal to the Brewster angle.

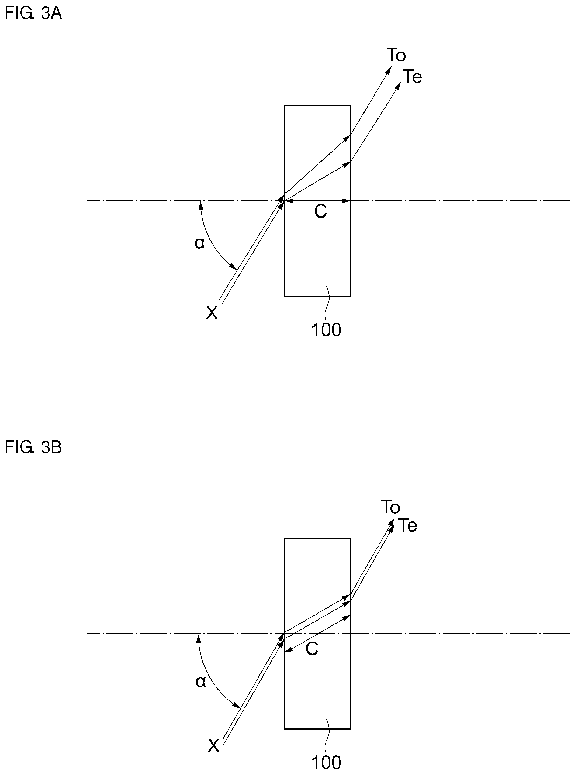

Next, the crystal orientation of the window member 20 will be described with reference to Figs. 3A and 3B. Figs. 3A and 3B are each a diagram for explaining birefringence in the uniaxial crystal. Specifically, Figs. 3A and 3B each show a state of light reflection and transmission in the case where light X is incident on a crystal 100 at an incident angle α. Here, the crystal 100 is a crystal having anisotropy and has an optic axis C.

First, as shown in Fig. 3A, when the optical axis of the light X that transmits the crystal 100 is not parallel to the optic axis C of the crystal 100, the light X propagates such that the light X is split to normal light and abnormal light having vibration planes orthogonal to each other. This is because, due to the crystal structure of the crystal 100, the phase velocity of a light beam is different depending on a propagation direction, and thus the refractive indexes of the normal light and the abnormal light are different from each other. Therefore, optical paths of transmitted light To of the normal light and transmitted light Te of the abnormal light are separated from each other, and birefringence occurs (see Fig. 3A). Accordingly, the energy of transmitted light with respect to incident light decreases, that is, the light transmission efficiency of the crystal 100 decreases. For example, when the crystal 100 is quartz, the refractive index of the normal light is higher than the refractive index of the abnormal light.

On the other hand, as shown in Fig. 3B, when the optical axis of the light X that transmits the crystal 100 is parallel to the optic axis C of the crystal 100, the refractive indexes of the normal light and the abnormal light at the crystal 100 are equal to each other. Therefore, the optical paths of the normal light and the abnormal light are not separated from each other, and the transmitted light To of the normal light and the transmitted light Te of the abnormal light are transmitted on the same optical path. Thus, the energy of transmitted light with respect to incident light increases, that is, the light transmission efficiency of the crystal 100 improves. As described above, to inhibit loss of transmitted light, desirably, separation of transmitted light does not occur, or the separation width is small even when such separation occurs.

In this regard, in the present embodiment, the window member 20 is mounted such that the angle formed between the optic axis C of the artificial quartz of the window member 20 and the optical axis of the laser light L that travels in the window member 20 is small. More suitably, the window member 20 is mounted such that the optic axis C and the optical axis of the laser light L that travels in the window member 20 are substantially parallel to each other as shown in Fig. 1. Accordingly, separation of the normal light and the abnormal light at the window member 20 is inhibited. Therefore, it is possible to improve the light transmission efficiency of the window member 20. When the window member 20 is quartz, the direction of the optic axis C is the same as that of the Z axis of crystal axes of quartz.

As described above, according to the present embodiment, the window member 20 is provided such that the optic axis C of the window member 20 is substantially parallel to the optical axis of the laser light that transmits the window member 20. Accordingly, separation of transmitted light is inhibited, and it is possible to improve the light transmission efficiency of the window member 20.

Moreover, when the window member is made of calcium fluoride or magnesium fluoride as disclosed in Patent Document 1, the fluoride material has hygroscopicity and deliquescence, and thus the water resistance of the window member can be insufficient. In this regard, according to the present embodiment, since the window member 20 is made of artificial quartz, it is possible to improve the water resistance of the window member 20 as compared to the configuration disclosed in Patent Document 1.

In the above embodiment, the example in which the entirety of the window member 20 is made of a uniaxial crystal has been described. However, at least the transmission region of the window member 20 only needs to be a uniaxial crystal, and the peripheral region excluding the transmission region may be made of a material that substantially does not transmit the laser light or reflects the laser light.

Moreover, by providing a reflective member on either region of the main surface 20a of the window member 20, the laser light may be reflected in the internal space 12 of the gas laser tube 10. Accordingly, the laser light generated in the internal space 12 of the gas laser tube 10 and reflected light reflected on the reflective member transmit the window member 20, so that it is possible to more effectively apply light.

Moreover, although omitted in Fig. 1, a window member that is the same as the window member 20 may also be provided at the incident side of the gas laser tube 10. In this case, similar to the window member 20, the window member at the incident side is also preferably mounted such that the optical axis of laser light incident from the outside of the gas laser device and the optic axis of the window member are substantially parallel to each other.

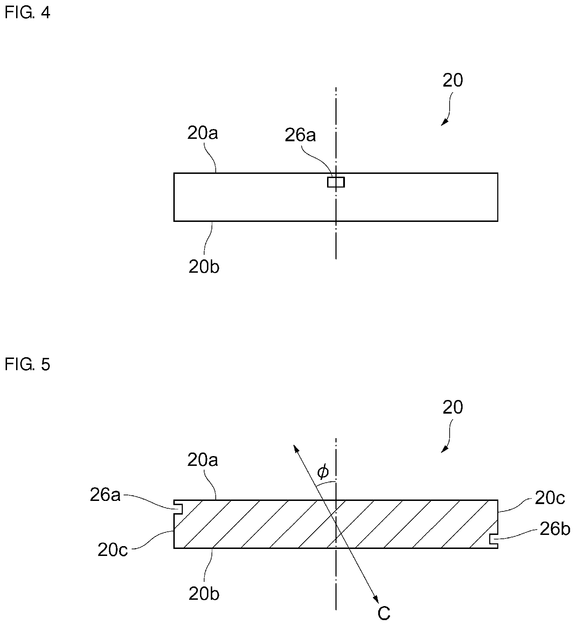

Next, one mode in which the above-described artificial quartz is mounted will be described with reference to Figs. 1, 2, 4, and 5. Fig. 4 is a plan view of the side surface of the window member of the gas laser device according to the embodiment of the present invention, and Fig. 5 is a cross-sectional view of Fig. 2 taken along a line V-V. Specifically, Fig. 4 is a plan view of the side surface of the window member 20 as seen from the direction of arrows shown in Fig. 2.

As shown in Fig. 5, in the present embodiment, recessed marks 26a (first mark) and 26b (second mark) indicating the direction of the optic axis C are formed on the side surface 20c of the window member 20. The method for forming the marks 26a and 26b is not particularly limited, but, for example, it is possible to form the marks 26a and 26b by measuring the crystal orientation of the optic axis through X-ray diffraction analysis of the window member 20 and cutting the window member 20 on the basis of the direction of the optic axis.

As shown in Fig. 2, the mark 26a is located at a position different from that of the other mark 26b in plan view of the main surface 20a of the window member 20. For example, in the present embodiment, the marks 26a and 26b are located at positions opposing each other across the center of the main surface 20a (that is, positions at the diameter of the circle of the main surface 20a) in the peripheral region 24 of the main surface 20a. For example, it is indicated that a line connecting the mark 26a to the mark 26b is parallel to the direction of the optic axis C in plan view of the main surface 20a.

Moreover, as shown in Fig. 5, the mark 26a is located on the side surface 20c at the main surface 20a side, and the other mark 26b is located on the side surface 20c at the main surface 20b side. Thus, the marks 26a and 26b indicate the direction of a tilt angle ϕ of the optic axis C relative to a line normal to the main surface 20a of the window member 20. Specifically, the marks 26a and 26b indicate that the tilt angle ϕ of the optic axis C based on the line normal to the main surface 20a of the window member 20 is counterclockwise or clockwise in the plan view of the cross-section shown in Fig. 5. In the present embodiment, in the plan view of the cross-section shown in Fig. 5, the line connecting the mark 26a to the mark 26b is tilted counterclockwise based on the line normal to the main surface 20a of the window member 20, and thus it is also indicated that the optic axis C is titled counterclockwise. As a specific example of the tilt angle ϕ, for example, in the case where the wave length of the laser light is 193 nm, the window member 20 is cut out from a quartz crystal such that the tilt angle ϕ is 30.86±0.1 degrees.

Moreover, as shown in Fig. 1, the projections 16a and 16b are formed in the mount portion 14 so as to correspond to the recessed marks 26a and 26b of the window member 20. When the marks 26a and 26b of the window member 20 and the projections 16a and 16b of the mount portion 14 are fitted to each other as described above, the window member 20 is mounted to the mount portion 14, and the window member 20 is also positioned such that the direction of the optic axis C of the window member 20 is a predetermined direction with respect to the optical axis of the laser light L.

As described above, the marks 26a and 26b has a function as a mark indicating the direction of the optic axis C in a three-dimensional space, and also has a function as a positioning mechanism to uniquely determine the angle and the direction of the window member 20 when the window member 20 is mounted to the mount portion 14. Thus, the convenience in a step of mounting the window member 20 to the mount portion 14 such that the optic axis C of the window member 20 is a predetermined direction, during production of the gas laser device 1, is improved. In addition, as compared to the configuration in which the marks 26a and 26b and the projections 16a and 16b are not provided, the joining strength of the window member 20 and the mount portion 14 is increased when the recessed marks 26a and 26b are fitted to the projections 16a and 16b. Therefore, the airtightness of the gas laser tube 10 in which gas is enclosed is improved. The shapes of the marks are illustrative and not limited thereto. For example, the marks may each have a projection shape or a recess/projection shape instead of the recess shape, and the shape of the mount portion may have a recess shape or a recess/projection shape corresponding to the marks, instead of the projection shape. Moreover, the number of marks or projections formed on the window member 20 or the mount portion 14 is not limited to two, and may be one or may be three or more.

As described above, the gas laser device 1 according to each embodiment of the present invention has the following configurations and advantageous effects achieved by one of the above configurations or a combination of some of the above configurations.

The gas laser device according to the present embodiment includes: a gas laser tube having an internal space in which gas is enclosed, laser light being generated by exciting the gas; and a window member mounted at one end side in an axial direction of the gas laser tube. The window member has a transmission region that is a uniaxial crystal, the transmission region is configured such that the laser light is transmitted therethrough, and the window member is mounted on the gas laser tube such that an optical axis of the laser light transmitting the transmission region and an optic axis of the uniaxial crystal are substantially parallel to each other.

According to this, the optic axis C of the window member 20 and the optical axis of the laser light transmitting the window member 20 are substantially parallel to each other. Therefore, separation of transmitted light is inhibited, and it is possible to improve the light transmission efficiency of the window member 20.

In the above configuration, the window member may have a main surface including the transmission region, and at least one mark indicating a direction of the optic axis in plan view of the main surface may be formed on the window member.

According to this, the convenience in a step of mounting the window member 20 to the mount portion 14 such that the optic axis C of the window member 20 is a predetermined direction, during production of the gas laser device 1, is improved.

In the above configuration, the window member may have a first main surface and a second main surface opposing each other, and a side surface located between the first main surface and the second main surface, and the at least one mark may include a first mark and a second mark formed on the side surface of the window member.

According to this, the direction of the optic axis C is indicated by the marks 26a and 26b, which are formed on the side surface 20c of the window member 20. Therefore, the convenience in a step of mounting the window member 20 to the mount portion 14 such that the optic axis C of the window member 20 is a predetermined direction is improved.

In the above configuration, in plan view of the first main surface or the second main surface, the first mark may be located at a position different from that of the second mark, and, in plan view of the side surface, the first mark may be located at the first main surface side and the second mark may be located at the second main surface side.

According to this, it is indicated that the line connecting the mark 26a to the mark 26b is parallel to the direction of the optic axis C in plan view of the main surface 20a. In addition, it is indicated that the tilt angle ϕ of the optic axis C based on the line normal to the main surface 20a of the window member 20 is counterclockwise or clockwise. Therefore, the convenience in a step of mounting the window member 20 to the mount portion 14 such that the optic axis C of the window member 20 is a predetermined direction is improved.

In the above configuration, the first mark and the second mark each may have a recess shape, a projection shape, or a recess/projection shape, and the gas laser tube may have a mount portion to which mounting is performed such that the first mark and the second mark are fitted thereto.

According to this, the joining strength of the window member 20 and the mount portion 14 is increased when the recessed marks 26a and 26b are fitted to the projections 16a and 16b. Therefore, the airtightness of the gas laser tube 10 in which gas is enclosed is improved.

In the above configuration, the window member may be positioned with respect to the gas laser tube such that an incident angle at which the laser light is incident on the window member is substantially equal to a Brewster angle.

According to this, no reflected light is generated at the window member 20 from the P-polarized component of the laser light, and the entire P-polarized component is transmitted therethrough. Therefore, as compared to the configuration in which the incident angle θ is different from the Brewster angle, it is possible to improve the light transmission efficiency of the window member 20.

In the above configuration, the uniaxial crystal may be artificial quartz.

According to this, the window member 20 has a high transmittance in a wide wave length range, and the light transmission efficiency of the window member 20 improves. In addition, even in the case where the laser light has a relatively short wave length and has high energy, the optical characteristics are unlikely to be deteriorated and progress of degradation is slow. Furthermore, artificial quartz does not have deliquescence and thus has excellent water resistance.

In the above configuration, the configuration of the window member is not particularly limited, but the window member may have, for example, a circular flat plate shape.

In the above embodiment, the example in which the marks 26a and 26b are formed on the side surface 20c of the window member 20 has been described, but, as a modification, the marks may be formed on the main surface of the window member. In addition, the marks do not necessarily have to be provided.

It should be noted that each embodiment described above is intended to facilitate understanding of the present invention and is not to be interpreted as limiting the present invention. The present invention can be modified or improved without deviating from the purpose, and the equivalents are included in this invention. In other words, appropriate design changes made to the embodiment by those skilled in the art are included in the scope of the invention as long as the features of the present invention are provided. For example, the elements and arrangement, materials, condition, shape, and size thereof included in the embodiment are not limited to those exemplified and can be modified appropriately. Moreover, the elements included in the embodiment may be combined as long as it is technically possible and are within the scope of the present invention as long as the combined elements include the features of the present invention.

### Reference Signs List

- 1: gas laser device
- 10: gas laser tube
- 12: internal space
- 14: mount portion
- 16a,: 16b projection
- 20: window member
- 20a, 20b: main surface
- 20c: side surface
- 22: transmission region
- 24: peripheral region
- 26a, 26b: mark
- 100: crystal

## Claims

1. A gas laser device comprising:
a gas laser tube having an internal space in which gas is enclosed, laser light being generated by exciting the gas; and
a window member mounted at one end side in an axial direction of the gas laser tube, wherein
the window member has a transmission region that is a uniaxial crystal,
the transmission region is configured such that the laser light is transmitted therethrough, and
the window member is mounted on the gas laser tube such that an optical axis of the laser light transmitting the transmission region and an optic axis of the uniaxial crystal are substantially parallel to each other.

2. The gas laser device according to claim 1, wherein
the window member has a main surface including the transmission region, and
at least one mark indicating a direction of the optic axis in plan view of the main surface is formed on the window member.

3. The gas laser device according to claim 2, wherein the window member has a first main surface and a second main surface opposing each other, and a side surface located between the first main surface and the second main surface, and
the at least one mark includes a first mark and a second mark formed on the side surface of the window member.

4. The gas laser device according to claim 3, wherein
in plan view of the first main surface or the second main surface, the first mark is located at a position different from that of the second mark, and
in plan view of the side surface, the first mark is located at the first main surface side and the second mark is located at the second main surface side.

5. The gas laser device according to claim 3 or 4, wherein
the first mark and the second mark each have a recess shape, a projection shape, or a recess/projection shape, and
the gas laser tube has a mount portion to which mounting is performed such that the first mark and the second mark are fitted thereto.

6. The gas laser device according to any one of claims 1 to 5, wherein the window member is positioned with respect to the gas laser tube such that an incident angle at which the laser light is incident on the window member is substantially equal to a Brewster angle.

7. The gas laser device according to any one of claims 1 to 6, wherein the uniaxial crystal is artificial quartz.

8. The gas laser device according to any one of claims 1 to 7, wherein the window member has a circular flat plate shape.
